Europäisches Patentamt

(19) European Patent Office

Office européen des brevets

(11) Numéro de publication: **O OO8 643**

**B1**

(12) **FASCICULE DE BREVET EUROPEEN**

(45) Date de publication du fascicule du brevet: **17.02.82**

(21) Numéro de dépôt: **79102458.1**

(22) Date de dépôt: **16.07.79**

(51) Int. Cl.³: **G O2 B 5/14, G O2 B 7/26, H O1 R 11/11**

(54) Embout de connexion pour câble conducteur d'énergie, et procédé de montage dudit embout.

(30) Priorité: **13.09.78 US 942084**

(43) Date de publication de la demande:
**19.03.80 Bulletin 80/6**

(45) Mention de la délivrance du brevet:
**17.02.82 Bulletin 82/7**

(84) Etats contractants désignés:
**DE FR GB**

(56) Documents cités:
**FR - A - 2 368 728**
**US - A - 4 087 158**

(73) Titulaire: **International Business Machines Corporation**
**Armonk, N.Y. 10504 (US)**

(72) Inventeur: **Uberbacher, Edward Charles**
**8708 Cliff Top Ct.**
**Raleigh, NC 27612 (US)**

(74) Mandataire: **Bonin, Jean-Jacques**
**COMPAGNIE IBM FRANCE Département de Propriété Industrielle**
**F-06610 La Gaude (FR)**

Courier Press, Leamington Spa, England.

Embout de connexion pour câble conducteur d'énergie, et procédé de montage dudit embout

Domaine Technique

La présente invention concerne les câbles conducteurs d'énergie tels que notamment les câbles optiques et plus particulièrement un ensemble de connexion pour un tel câble formé d'une fibre optique et de sa gaine de protection.

On a constaté que des fibres optiques pouvaient être utilisées pour transmettre des données numériques à des vitesses très supérieures à celles possibles avec des conducteurs électriques de même taille. C'est pour cette raison qu'il a été très intéressant de développer les conducteurs de données optiques afin de les utiliser dans les systèmes de traitement de données électroniques.

L'un des obstacles à l'utilisation pratique des fibres optiques comme canal de transmission de données réside dans le fait que ces fibres sont fragiles et peuvent être facilement brisées. En outre, il est bien plus difficile de raccorder des fibres optiques pour réaliser un chemin de données continu que de raccorder des conducteurs électriques métalliques. Un alignement défectueux des fibres peut provoquer la dégradation du signal optique ainsi que le mélange ou le transfert accidentel d'un signal à un canal optique adjacent. Il est évident que la dégradation et le mélange des signaux affecteront gravement l'intégrité des données transmises par un tel câble.

Dans le but de protéger les extrémités des fibres optiques et pour permettre à celles-ci d'être raccordées avec plus de précision, on a conçu des embouts de connexion qui sont fixés aux extrémités de la fibre optique. Les embouts connus dans l'art antérieur sont généralement trop compliqués, trop chers et pas assez fiables.

La présente invention consiste en un embout de connexion simple et très efficace, qui permet de protéger l'extrémité d'un câble formé d'un fil conducteur et d'une gaine de protection. Le câble est initialement dénudé sur une courte longueur du conducteur.

L'embout de connexion comprend un corps longitudinal muni d'un évidement axial recevant l'extrémité dénudée du câble, et formé de deux parties cylindriques consécutives de diamètres différents. Une douille se contractant à la chaleur est disposée dans la partie de l'évidement ayant le diamètre le plus grand. Un manchon en matériau de remplissage fondant à la chaleur est disposé à l'intérieur de la douille se contractant à la chaleur. L'ensemble est réchauffé après son assemblage pour provoquer la contraction de la douille lorsque le matériau de remplissage formant le manchon commence à fondre. La contraction de la douille provoque le transfert du matériau de remplissage fondant dans la deuxième partie de l'évidement à diamètre plus petit du corps de l'embout et y fixe la fibre optique en place.

D'autres objets, caractéristiques et avantages de la présente invention resortiront mieux de l'exposé qui suit, fait en rérérence aux dessins annexés à ce texte, qui représentent un mode de réalisation préféré de celle-ci.

Brève description des figures

La figure 1 est une vue en coupe éclatée d'un ensemble de connexion réalisé avec l'embout de connexion de la présente invention, avant son assemblage.

La figure 2 est une vue en coupe d'un ensemble de connexion achevé.

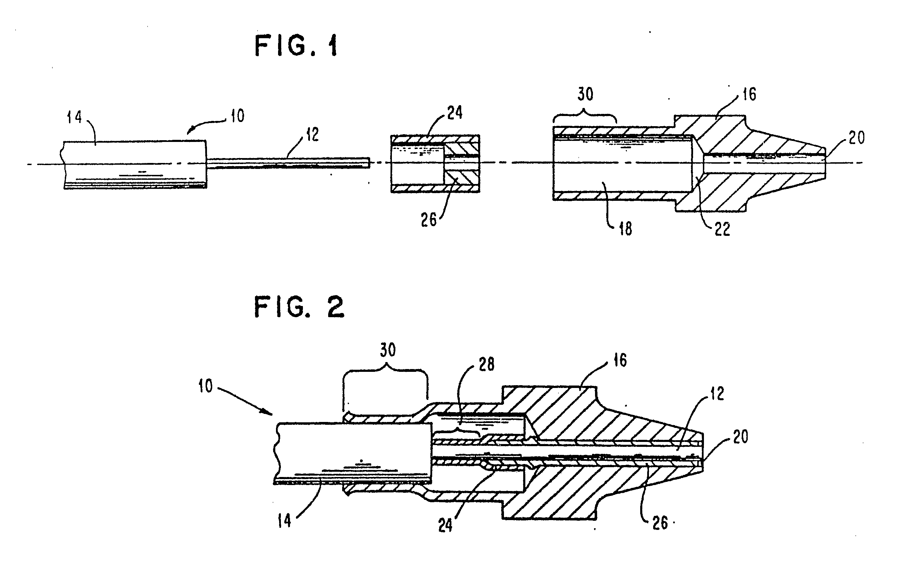

La figure 1 représente un câble optique 10 formé d'une fibre optique ou conductrice de lumière centrale 12 et d'une gaine de protection 14 de préférence en une matière plastique appropriée. Avant de fixer un embout de connexion à ce câble, une courte longueur de gaine est retirée de l'extrémité du câble 10 en utilisant un outil à dénuder à chaud approprié. Un outil à dénuder à chaud consiste fondamentalement en une certaine longueur de fil chauffant qui est amenée en contact avec la gaine 14 pour en fondre au moins une partie de façon à pouvoir la retirer de l'extrémité du câble. L'utilisation de ce type d'outil est recommandé étant donné que les outils à dénuder metalliques classiques pourraient endommager la fibre de verre et la rendre encore plus fragile.

L'embout de connexion comprend un corps allongé 16 muni d'un évidement axial cylindrique. Cet évidement est composé d'une première partie 18 à diamètre relativement important et d'une deuxième partie 20 à diamètre plus petit, disposée dans le prolongement de la première partie. Les parties 18 et 20 sont raccordées par une zone de transition définie par un épaulement 22 s'évasant du passage à petit diamètre vers le passage à grand diamètre.

L'embout de connexion comprend en outre un ensemble intérieur de fixation formé d'une douille tubulaire 24 réalisée en un matériau se contractant à la chaleur et d'un manchon également tubulaire 26 disposé à l'intérieur de la douille 24 et réalisé en un matériau de remplissage fondant à la chaleur. Le matériau se contractant à la chaleur formant la douille 24 peut être un matériau classique, par exemple du chlorure de polyvinyle modifié, stabilisé, à liaisons transversales, fabriqué et vendu par Raychem Corporation de Menlo Park, CA, USA, sous la référence RT-800. Le matériau de remplissage peut être un métal de soudure classique ou tout autre matériau fondant lorsqu'il est réchauffé et durcissant lorsqu'il est ramené à la température ambiante. Par exemple, un adhésif fondant à chaud peut être utilisé comme matériau de remplissage. Le point de fusion du matériau de remplissage doit être légèrement plus élevé que la température de contraction de la douille 24. Le diamètre extérieur initial de la douille 24 se contractant à la chaleur sera de préférence légèrement inférieur au diamètre intérieur de la première partie 18 de l'évidement axial du corps de connecteur 16, afin de permettre un emmanchement facile de la douille 24 dans la première partie creuse 18 du corps 16.

Pour le montage de l'embout de connexion, l'ensemble douille et manchon est tout d'abord emmanché dans la première partie 18 de l'évidement du corps 16. L'extrémité dénudée du câble 10 est alors introduite dans la douille 24, la fibre 12 traversant successivement la douille 24, le manchon 26 puis la seconde partie 20 de l'évidement du corps 16 jusqu'à son extrémité extérieure, au moins. De préférence, le diamètre intérieur initial de la douille 24 se contractant à la chaleur est quelque peu inférieur au diamètre extérieur de la gaine 14 du câble 10 de façon que la gaine 14 ne puisse pas être introduite à l'intérieur de la douille 24 se contractant à la chaleur, mais au contraire vienne buter contre l'extrémité de cette dernière.

L'ensemble est alors chauffé pour provoquer la contraction de la douille 24 tout en provoquant la fusion du matériau de remplissage. A la figure 2, on voit que la douille 24 en se contractant se resserre sur la fibre optique 12 dans la zone 28. A mesure que la douille 24 se contracte, le matériau de remplissage fondant formant le manchon 26 est forcé dans la partie 20 pour remplir l'espace 26 entre la surface extérieure de la fibre optique 12 et la surface intérieure de la deuxième partie 20 de l'évidement axial du corps de l'embout 16. Lorsque le matériau de remplissage durcit, il protège le fibre et en même temps, la maintient en position dans le corps de l'embout 16.

Pour réduire les contraintes s'exerçant à l'intérieur du corps 16, on peut déformer la section de paroi cylindrique 30 du corps 16 pour la mettre en contact avec la gaine 14. Suivant le type de matériau formant le corps 16, la section 30 peut être déformée soit par application de chaleur, soit par application de pression.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention. Notamment, le même embout de connexion et les mêmes techniques de montage pourraient être utilisés pour la connexion de câbles à conducteur métallique plein ou tressé. Dans cette application, il va de soi que le matériau de remplissage doit être constitué d'un matériau isolant.

## Revendications

1. Embout de connexion pour câble (10) conducteur d'énergie formé d'un conducteur (12) entouré d'une gaine (14), du genre comprenant: un corps tubulaire (16) destiné à recevoir au moins une partie dénudée (12) dudit câble et des moyens de fixation dudit corps tubulaire sur ladite partie dénudée, caractérisé en ce que: ledit corps tubulaire (16) comporte un évidement central présentant deux parties (18, 20) coaxiales et consécutives, la seconde partie (20) ayant un diamètre intérieur inférieur à celui de la première (18) mais supérieur au diamètre dudit conducteur (12) et lesdits moyens de fixation comportent une douille tubulaire (24) constituée d'un matériau thermorétractable, destinée à être introduite dans ladite première partie (18) du corps tubulaire (16) jusqu'à venir en butée contre le bord (22) de ladite seconde partie (20) et comportant un évidement axial de diamètre inférieur à celui dudit câble (10) muni de sa gaine (14) sur lequel on désire monter l'embout, un manchon tubulaire (26) constitué d'un matériau fondant sous l'effet de la chaleur, disposé coaxialement à l'intérieur de ladite douille (24) et de plus faible longueur que celle-ci de manière telle qu'il vienne également en butée contre le bord intérieur de ladite seconde partie, son diamètre extérieur étant supérieur au diamètre intérieur de ladite seconde partie (20) et son évidement central ayant un diamètre supérieur à celui de la partie dénudée (12) du câble sur lqueul on désire monter l'embout.

2. Embout selon la revendication 1, caractérisé en ce que la longueur de ladite douille (24) est inférieure à celle de la première partie (18) dudit évidement central.

3. Embout selon la revendication 2 caractérisé en ce que: le diamètre de la première partie de l'évidement central dudit corps (16) est légèrement supérieur au diamètre extérieur dudit câble (10) muni de sa gaine et la portion dudit corps tubulaire (16) entourant ladite première partie (18) comprend au moins une portion déformable (30) de façon que, lorsque le conducteur (12) est mis en place dans ledit corps tubulaire (16) et que l'extrémité gainée (14) du câble (10) a pénétré dans ladite première partie (18), on puisse amener ladite portion déformable (30) à enserrer ledit câble (10).

4. Embout selon l'une quelconque des revendications précédentes, caractérisé en ce que ledit conducteur (12) est une fibre optique.

5. Embout selon l'une quelconque des revendications précédentes caractérisé en ce que ledit manchon tubulaire thermorétractable (24) est en chlorure de polyvinyle.

6. Procédé de montage d'un câble gainé conducteur d'énergie (10) dont l'extrémité (12) a été dénudée sur une certaine longueur, avec un embout de connexion comprenant un corps tubulaire (16) dont l'évidement axial comprend deux parties (18, 20) de sections différentes, la partie de section la plus faible (20) ayant une section supérieure à celle du conducteur nu (12), caractérisé en ce que: on introduit dans la partie de plus grande section (18) dudit évidement un ensemble de fixation composé d'une douille tubulaire (24) constituée d'un matériau thermorétractable, et d'un manchon tubulaire (26) disposé à l'intérieur de ladite douille, de plus faible longueur que cette dernière et constitué d'un matériau fondant sous l'effet de la chaleur, jusqu'à ce que ladite douille (24) et ledit manchon (26) viennent en butée au fond de ladite première partie (18), on insère ledit câble (10) dans ledit corps tubulaire (16) du côté de ladite première partie (18) de plus grande section jusqu'à ce que sa partie dénudée (12) s'étende sur au moins une portion desdites premières et secondes parties (18, 20), et on chauffe l'ensemble à une température appropriée pour permettre à ladite douille (24) de se contracter radialement jusqu'à enserrer ledit conducteur dénudé (12) et transférer au moins une partie du matériau dudit manchon (26) dans l'espace compris entre la surface extérieure de la partie dénudée (12) du câble et la surface intérieure de ladite partie (20).

7. Procédé selon la revendication 6, dans lequel ladite douille (24) a une longueur inférieure à celle de ladite première partie (18) de l'évidement et la partie dénudée (12) dudit câble a une longueur sensiblement supérieure à la longueur de ladite douille (24), caractérisé en ce qu'on introduit ledit câble (10) dans ledit corps (16) jusqu'à ce que l'extrémité de la gaine (14) dudit câble (10) vienne buter contre ladite douille (24).

8. Procédé selon la revendication 7, caractérisé en ce quel la longueur de la partie dénudée (12) dudit câble (10) est sensiblement égale à la somme des longueurs de ladite douille (24) et de ladite seconde partie (20) de l'évidement.

9. Procédé selon la revendication 6 ou 7, caractérisé en ce qu'on déforme ledit corps (16) dans sa portion (30) entourant ladite gaine jusqu'à venir enserrer cette dernière et fixer ainsi rigidement ledit embout et ledit câble (10).

## Patentansprüche

1. Anschlußvorrichtung für ein energieleitendes Kabel (10), die von einem mit einer Hülle (14) umgebenen Leiter (12) gebildet wird und einschließt: einen Hohlkörper (16) zur Aufnahme wenigstens eines freigelegten Teils (12) dieses Kabels, und Befestigungsmittel zum Befestigen dieses Hohlkörpers auf diesem freigelegten Teil, dadurch gekennzeichnet, daß der Hohlkörper (16) eine zentrale Aussparung mit zwei koaxialen, aufeinanderfolgenden Teilen (18, 20) aufweist, wobei der zweite Teil (20) einen Innendurchmesser hat der kleiner als der des ersten Teils (18), aber größer als der Durchmesser des Leiters (12) ist, und die Befestigungsmittel einschließen: eine Hohlfassung (24) aus einem wärmeschrumpfenden Material, die dazu bestimmt ist in den ersten Teil (18) des Hohlkörpers (16) eingeführt zu werden, bis sie an den Rand (22) des zweiten Teils (20) anstößt, und die eine axiale Aussparung aufweist, deren Durchmesser kleiner ist als der des mit seiner Hülle (14) versehenen Kabels (10) auf welchem die Anschlußvorrichtung zu befestigen ist, eine Hohlmuffe (28) aus einem schmelzbaren Material, die koaxial im Innern der Fassung (24) angeordnet ist und deren Länge kleiner ist als diese, so daß sie ebenso an den inneren Rand des zweiten Teils anstößt, wobei ihr Außendurchmesser größer ist als der Innendurchmesser des zweiten Teils (20) und ihre zentrale Aussparung einen größeren Durchmesser hat als der des freigelegten Teils (12) des Kabels auf welchem die Anschlußvorrichtung zu befestigen ist.

2. Anschlußvorrichtung nach Anspruch 1, dadurch gekennzeichnet, daß die Länge der Fassung (24) kleiner ist als die des ersten Teils (18) der zentralen Aussparung.

3. Anschlußvorrichtung nach Anspruch 2, dadurch gekennzeichnet, daß der Durchmesser des ersten Teils der zentralen Aussparung des Hohlkörpers (16) ein wenig größer ist als der Außendurchmesser des mit seiner Hülle umgebenen Kables (10), und der Abschnitt des ersten Teil (18) umgebenen Hohlkörpers wenigstens einen verformbaren Abschnitt (30) aufweist, so daß der verformbare Abschnitt (30) das Kabel (10) einzwängen kann, sobald der Leiter (12) in den Hohlkörper (16) eingeführt ist und sobald das umhüllte Ende (14) des Kabels (10) in den ersten Teil (18) eingedrungen ist.

4. Anschlußvorrichtung nach einem der vorhergehenden Ansprüche, dadurch gekennzeichnet, daß der Leiter (12) aus einer optischen Faser besteht.

5. Anschlußvorrichtung nach einem der vorhergehenden Ansprüche, dadurch gekennzeichnet, daß die wärmeschrumpfende Hohlmuffe (24) aus Polyvinylchlorid besteht.

6. Verfahren zum Befestigen eines energieleitenden, umhüllten Kabels (10), dessen Ende (12) über eine gewisse Länge freigelegt wirde, mit einer Anschlußvorrichtung, das einen Hohlkörper (16) einschließt, dessen axiale Aussparung aus zwei Teilen (18, 20) verschiedener Abschnitte besteht, wobei der Teil des kleinsten Abschnittes (20) einen größeren Abschnitt hat als der des freigelegten Leiters (12), dadurch gekennzeichnet, daß in den Teil des größten Abschnitts (18) der Aussparung eine Befestigungsvorrichtung eingeführt wird, die aus einer Hohlfassung (24) aus einem wärmeschmelzenden Material und einer Hohlmuffe (26) besteht, die im Innern der Fassung angeordnet ist und eine kleinere Länge als diese hat und aus einem schmelzbaren Material besteht, bis die Fassung (24) und die Muffe (26) am Boden des ersten Teils (18) anstoßen, in den Hohlraum (16) auf der Seite des ersten Teils (18) mit dem größten Abschnitt das Kabel (10) eingeführt wird, bis der freigelegte Teil (12) sich über wenigstens einen Abschnitt des ersten und zweiten Teils (18, 20) erstreckt, und die Vorrichtung auf eine geeignete Temperatur erhitzt wird, damit die Fassung (24) sich radial zusammenziehen kann, bis sie den freigelegten Leiter (12) einzwängt und wenigstens einen Teil des Materials der Muffe (26) in den zwischen der äußeren Oberfläche des freigelegten Teils (12) des Kabels und der inneren Oberfläche des genannten Teils (20) befindlichen Raum überträgt.

7. Verfahren nach Anspruch 6, bei dem die Fassung (24) eine kleinere Länge als die des ersten Teils (18) der Aussparung, und der freigelegte Teil (12) des Kabels eine wesentlich größere Länge als die der Fassung (24) hat, dadurch gekennzeichnet, daß das Kabel (10) in den Hohlkörper (16) eingeführt wird, bis das Ende der Hülle (14) des Kabels (10) an die Fassung (24) anstößt.

8. Verfahren nach Anspruch 7, dadurch gekennzeichnet, daß die Länge des freigelegten Teils (12) des Kabels (10) fast gleich der Summe der Längen der Fassung (24) und des zweiten Teils (20) der Aussparung ist.

9. Verfahren nach Anspruch 6 oder 7, dadurch gekennzeichnet, daß der Hohlkörper (16) in seinem die Hülle umgebenden Teil (30) verformt wird, bis er diese einzwängt und so die Anschlußvorrichtung starr mit dem Kabel (10) verbindet.

## Claims

1. A connector assembly for an energy-conducting cable (10), formed by a conductor (12) surrounded by a sheath (14), the assembly including: a bore (16) for receiving at least one stripped portion (12) of said cable, and securing means for securing said bore to said stripped portion, characterized in that: said bore (16) is provided with a central recess with two coaxial, consecutive portions (18, 20), the second portion (20) having an inner diameter smaller than that of the first portion (18) but greater than the diameter of said conductor (12), and said securing means include: a tubular socket (24) made of a heat-shrinkable material to be introduced into said first portion (18) of the bore (16) until it comes to rest against the edge (22) of said second portion (20), and provided with an axial recess having a diameter smaller than that of said cable (10) surrounded by its sheath (14) to which the connector assembly is to be secured, a tubular sleeve (28) made of a heat-meltable material, coaxially received within, and shorter than, said socket (24) so that it comes also to rest against the inner edge of said second portion, its outer diameter exceeding the inner diameter of said second portion (20), and the diameter of its central recess exceeding the one of the stripped portion (12) of the cable to which the connector assembly is to be secured.

2. A connector assembly according to claim 1, characterized in that the length of said socket (24) is smaller than that of the first portion (18) of said central recess.

3. A connector assembly according to claim 2, characterized in that: the diameter of the first portion of the central recess of said bore (16) is slightly exceeding the outer diameter of said cable (10) surrounded by its sheath, and the part of said bore (16) surrounding said first portion (18) includes at least one deformable portion (30) so that when the conductor (12) is introduced into said bore (16) and the sheathed end (14) of the cable (10) penetrates into said first portion (18) said deformable portion (30) can be caused to tightly surround said cable (10).

4. A connector assembly according to any one of the preceding claims, characterized in that said conductor (12) is an optical fibre.

5. A connector assembly according to any of the preceding claims, characterized in that said heat-shrinkable, tubular socket (24) is made of polyvinyl chloride.

6. A method for securing a sheathed, energy-conducting cable (10) the end (12) of which has been stripped over a certain length, using a connector assembly provided with a bore (16) the axial recess of which comprises two portions (18, 20) with different sections, the portion with the smallest section (20) having a section exceeding that of the stripped conductor (12), characterized by the following steps: introducing into the portion with the largest section (18) of said recess a securing assembly consisting of a tubular socket (24) made of a heat-shrinkable material, and of a tubular sleeve (26) inserted in said socket, shorter than the latter and made of a heat-shrinkable material, until said socket (24) and said sleeve (26) come to rest at the bottom of said first portion (18), inserting said cable (10) into said bore (16) at the side of said first portion (18) with the largest section until its stripped portion (12) extends over at least part of said first and second portion (18, 20), and heating the assembly at an appropriate temperature to cause said socket (24) to shrink radially around the stripped conductor (12) and to transfer at least part of the material of said sleeve (26) to the space between the outer surface of the stripped portion (12) of the cable and the inner surface of said portion (20).

7. A method according to claim 6, where said socket (24) has a length smaller than that of said first portion (18) of the recess and where the stripped portion (12) of said cable has a length considerably exceeding the length of said socket (24), characterized in that said cable (10) is introduced in said bore (16) until the end of the sheath (14) of said cable (10) abuts the end of said socket (24).

8. A method according to claim 7, characterized in that the length of the stripped portion (12) of said cable (10) is virtually equal to the sum of the lengths of said socket (24) and of said second portion (20) of the recess.

9. A method according to claim 6 or 7, characterized in that said bore (16) is deformed in its portion (30) surrounding said sheath until it tightly surrounds the latter thus rigidly fixing said connector assembly and said cable (10).

FIG. 1

FIG. 2

0 008 643